# EUROPEAN PATENT APPLICATION

(11) **EP 1 772 250 A1**
(43) Date of publication of application: **11.04.2007**
(21) Application number: 06729212.8
(22) Date of filing: 16.03.2006
(51) Int. Cl.: B29C 47/56, B29C 47/06, B29B 9/06, B29L 9/00

(54) **EXTRUSION EQUIPMENT FOR MULTILAYER EXTRUSIONS AND PROCESS FOR PRODUCTION OF MULTILAYER EXTRUSIONS WITH THE SAME**

(30) Priority: 28.03.2005 JP 2005092271
(71) Applicant: Sumika Color Co., Ltd., Chuo-ku Osaka-shi Osaka 541-0043 (JP)
(72) Inventor: MORI, Hiroyuki c/o Osaka Factory of, Itami-shi, Hyogo 664-0842 (JP); MUSHIAKE, Naohiko c/o Osaka Factory of, Itami-shi, Hyogo 664-0842 (JP)
(74) Representative: Oser, Andreas
(86) International application number: PCT/JP2006/005215
(87) International publication number: WO 2006/103941

(57) **Abstract**

Extrusion equipment provided with a die assembly (100) for extruding a multilayer extrusion having a core-sheath structure composed of a core material and a sheath material covering the core material, which assembly (100) has the first die assembly body (250) provided with a core material feeding port (311) on the sidewall and the second die assembly body (200) provided with a sheath material feeding port (321) on the sidewall, the bodies (200, 250) being vertically connected in a detachable way. The first and second die assembly bodies (250, 200) are constituted in such a way as to be connected even when one of the bodies is horizontally turned by an angle of twice the angle α to the other. To absorb the vertical shift after the rotation, the first extruder (400) and the second extruder (500) are equipped with elevator devices. Thus, an extruder for a core material can be exchanged for an extruder for a sheath material without changing the directions of the extruders connected to a die assembly.

## Description

### Technical Field

The present invention relates to extrusion equipment for multilayer extrusions employed for production of multilayer extrusions each having such a core-sheath structure that a core material is covered with a sheath material on the outer periphery thereof and a process for production of multilayer extrusions with the same.

### Background Art

A pellet is generally employed as a material for resin molding or the like. The pellet is prepared by heating/melting a previously blended/adjusted resin raw material for extruding the same into the form of a strand (string) and cutting the obtained resin strand into the form of a small tablet. When molding various resin products or the like, the aforementioned pellet is so prepared that the raw material may not be blended/adjusted every molding of the resin products, a stable operation can be performed, the qualities of the products are stabilized and handling such as an operation of supplying the raw material to molding equipment etc. is simplified.

While the pellet for resin molding is generally entirely molded from the same resin, a multilayer pellet or a composite pellet consisting of a plurality of material portions is also proposed. Patent Document 1 (Japanese Patent Laying-Open No. 07-171828) describes a multilayer pellet of a core-sheath structure having a core of a material rich in viscosity and a sheath of crystalline polyolefin resin having less viscosity for solving such a problem that a pellet prepared from a material rich in viscosity easily causes blocking.

Patent Document 2 (Japanese Patent Laying-Open No. 59-081121) describes a multilayer pellet of a core-sheath structure prepared by, as a method of producing a pellet from an olefin-vinyl alcohol copolymer having such small melt tension that no strand is moldable for producing a pellet, molding a multilayer strand of a core-sheath structure formed by covering the outer periphery of a core of this resin having small melt tension with resin having large melt tension and thereafter cutting the same. As a production unit, that comprising a structure supplying a sheath material to the periphery of a core material on a die head for molding the pellet is shown.

In the method of producing a multilayer pellet disclosed in each of Patent Document 1 and Patent Document 2, the molding speed for the multilayer strand must be set relatively low, in order to reliably cover the outer periphery of the core material with the sheath material when molding the multilayer strand. Therefore, productivity of the multilayer strand and the multilayer pellet is so deteriorated that the production cost for the multilayer pellet is disadvantageously increased. In order to solve this problem, Patent Document 3 (Japanese Patent Laying-Open No. 2001-198918) discloses a method of producing a pellet by simultaneously producing a plurality of multilayer strands with a die assembly comprising a plurality of die heads, i.e., extrusion ports.

The structure of extrusion equipment for multilayer extrusions disclosed in Patent Document 3 is described with reference to Fig. 1. In the extrusion equipment for multilayer extrusions disclosed in Patent Document 3, an extruder 400 extruding and supplying a core material and another extruder 500 extruding and supplying a sheath material are connected to a die assembly 100 provided with a plurality of extrusion ports. Extruder 400 and extruder 500 are connected to die assembly 100 from directions perpendicular to each other. A plurality of multilayer extrusions each having a core material covered with a sheath material on the outer periphery thereof can be continuously produced by employing this extrusion equipment.
Patent Document 1: Japanese Patent Laying-Open No. 07-171828
Patent Document 2: Japanese Patent Laying-Open No. 59-081121
Patent Document 3: Japanese Patent Laying-Open No. 2001-198918

### Disclosure of the Invention

### Problems to be Solved by the Invention

Multilayer extrusions each prepared by covering the outer periphery of a core material with a relatively thin sheath material has been prevalent in general. Therefore, a twin-screw extruder, for example, having large extrusion capacity and a relatively large size is employed for extruder 400 extruding the core material, and a single-screw extruder, for example, having small extrusion capacity and a relatively small size is employed for extruder 500 extruding the sheath material.

In order to produce such a multilayer extrusion that the periphery of a thin core material is covered with a thick sheath material, scil. such a multilayer extrusion that the weight ratio between the core material and the sheath material is so inverted that the weight of the sheath material is larger than the weight of the core material with this equipment, however, the sheath material having the large weight ratio must be extruded with extruder 500 having small extrusion capacity, and hence the productivity is disadvantageously extremely reduced as a result.

When a small quantity of material is discharged with extruder 400 having large extrusion capacity, the retention time of the material in extruder 400 is elongated to elongate the heating time in extruder 400. Consequently, the extruded material may be disadvantageously degenerated due to a thermal effect.

In order to extrude the sheath material having the large weight ratio with extruder 400 having large extrusion capacity, on the other hand, extruders 400 and 500 may be detached from die assembly 100 and turned around by 90° about die assembly 100 in opposite directions respectively so that extruders 400 and 500 are reset. However, an extremely wide space is required in order to turn around extruder 400 having large extrusion capacity by 90° due to the large size thereof, and this operation is disadvantageously not easy due to requirement for an operation such as horizontal discharge after setting.

The present invention has been proposed in order to solve the aforementioned problems, and an object thereof is to provide extrusion equipment for multilayer extrusions allowing exchange of an extruder extruding a core material and another extruder for a sheath material without turning around the extruders connected to a die assembly and a process for production of multilayer extrusions with the same.

### Means for Solving the Problems

Extrusion equipment for multilayer extrusions according to the present invention comprises a die assembly extruding multilayer extrusions each having such a core-sheath structure that a core material is covered with a sheath material on the outer periphery thereof and a first extruder and a second extruder connected to the side surface of the aforementioned die assembly on different vertical positions at an angle α. The aforementioned die assembly has a first die assembly body provided with a core material supply port on the side surface thereof and a second die assembly body provided with a sheath material supply port on the side surface thereof, which are detachably connected in the vertical direction, and the aforementioned first die assembly body and the aforementioned second die assembly body are rendered connectable also when one of the die assembly bodies is horizontally rotated by an angle twice the aforementioned angle α with respect to the other die assembly body. A first working mode of making the aforementioned core material supply port communicate with the aforementioned first extruder and making the aforementioned sheath material supply port communicate with the aforementioned second extruder and a second working mode of making the aforementioned second extruder communicate with the aforementioned core material supply port and making the aforementioned first extruder communicate with the aforementioned sheath material supply port by connecting the aforementioned first die assembly body and the second die assembly body with each other by horizontally rotating the die assembly bodies at the angle twice the aforementioned angle α while absorbing vertical positional deviation with a height controller can be formed.

According to this structure, the extruder extruding the core material and the extruder extruding the sheath material can be exchanged without turning around the first extruder and the second extruder. Thus, the productivity of multilayer extrusions having an inverted core-sheath ratio is improved, and a problem of degeneration caused by heating the extruded materials over a long time can be avoided.

In the aforementioned extrusion equipment for multilayer extrusions, the aforementioned height controller may include an elevator provided on at least one of the aforementioned first extruder and the aforementioned second extruder. Further, the aforementioned height controller may include a connecting pipe, so bent as to have different heights on first and second ends, connecting the aforementioned die assembly and the aforementioned first extruder with each other and/or the aforementioned die assembly and the aforementioned second extruder with each other.

While the height of the core material supply port and the sheath material supply port and the height of the first extruder and the second extruder do not coincide with each other when the first die assembly body and the second die assembly body of the die assembly are horizontally rotated and connected with each other, the difference between the heights can be absorbed with the height controller.

With the aforementioned extrusion equipment for multilayer extrusions comprising the two extruders different in extrusion capacity from each other, multilayer extrusions each having such a core-sheath structure that a core material is covered with a sheath material on the outer periphery thereof with the sheath material larger in weight than the core material can be extruded from the aforementioned die assembly through a step of making an extruder having large extrusion capacity communicate with the aforementioned sheath material supply port of the aforementioned die assembly while making an extruder having small extrusion capacity communicate with the aforementioned core material supply port of the aforementioned die assembly and by supplying the sheath material with the extruder having large extrusion capacity and supplying the core material with the aforementioned extruder having small extrusion capacity.

### Effects of the Invention

According to the inventive extrusion equipment for multilayer extrusions and the process for production of multilayer extrusions with the same, an extruder extruding a core material and another extruder extruding a sheath material can be exchanged without turning around the extruders.

### Brief Description of the Drawings

Fig. 1A is a plan view showing the structure of a production unit for multilayer extrusions according to an embodiment of the present invention.
Fig. 1B is a perspective view showing a sectional structure of a strand produced with the production unit for multilayer extrusions according to the embodiment of the present invention.
Fig. 2 shows diagrams illustrating a mode of exchanging a first extruder and a second extruder with a die assembly according to the embodiment of the present invention.
Fig. 3 is a bottom plan view of the die assembly, showing the structure of an extrusion surface extruding multilayer strands in the embodiment of the present invention.
Fig. 4 is a sectional view taken along the line IV-IV in Fig. 3, showing a longitudinal sectional structure of the die assembly according to the embodiment of the present invention.
Fig. 5 is an exploded perspective view of the die assembly according to the embodiment of the present invention.
Fig. 6 shows perspective views illustrating the first extruder and the second extruder comprising elevators as height controllers in the embodiment of the present invention respectively.
Fig. 7(a) is a diagram as viewed along arrow VIIa-VIIa in Fig. 6(a), and Fig. 7(b) is a diagram as viewed along arrow VIIb-VIIb in Fig. 6(b).
Figs. 8(a) and 8(b) illustrate the second extruder comprising the elevator as the height controller in the embodiment of the present invention in correspondence to Figs. 7(a) and 7(b) respectively.
Fig. 9 shows perspective views illustrating bent connecting pipes provided as the height controllers in the embodiment of the present invention.
Fig. 10(a) is a diagram as viewed along arrow Xa-Xa in Fig. 9(a), and Fig. 10(b) is a diagram as viewed along arrow Xb-Xb in Fig. 9(b).

### Description of Reference Numerals

1 production unit, 100 die assembly, 110 extrusion port, 200 second die assembly body, 250 first die assembly body, 270 core nozzle, 290 bolt, 311 core material supply port, 315, 316, 325, 326 connecting pipe, 321 sheath material supply port, 400 first extruder, 500 second extruder, 900 multilayer strand, 910 core material, 920 sheath material.

### Best Modes for Carrying Out the Invention

A die assembly according to an embodiment of the present invention and a process for production of multilayer extrusions with the same are now described with reference to the drawings.

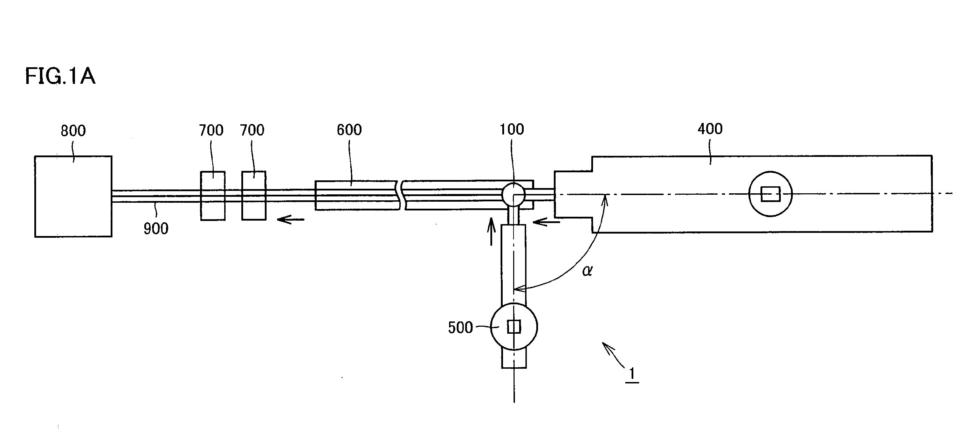

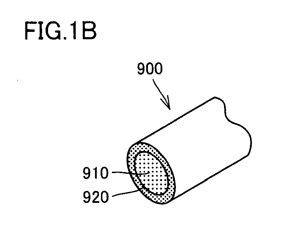

Fig. 1A is a plan view showing the structure of a production unit for multilayer extrusions according to this embodiment, and Fig. 1B is a perspective view showing a sectional structure of a strand produced with this production unit.

As shown in Fig. 1A, a first extruder 400 and a second extruder 500 are connected to a die assembly 100 provided on a production unit 1 from directions forming an angle α (90° in this case). Resin raw materials are supplied to and heated/melted in first extruder 400 and second extruder 500. The heated/melted materials are supplied to die assembly 100. A relatively large-sized twin-screw extruder is used as first extruder 400, while a relatively small-sized single-screw extruder is used as second extruder 500 in this embodiment.

A plurality of multilayer strands 900 are downwardly extruded from the lower surface of die assembly 100 in parallel with each other. As shown in Fig. 1B, a core material 910 constitutes the central portion of each multilayer strand 900, and a sheath material 920 covers the outer periphery thereof. Extruded multilayer strands 900 are fed to a cooling bath 600 to be cooled with cooling water and solidified.

Multilayer strands 900 downwardly extruded from die assembly 100 are horizontally turned around in cooling bath 600, and guided through cooling bath 600 in the longitudinal direction thereof.

Multilayer strands 900 cooled in cooling bath 600 are fed to a pelletizer 800 through a hydro-extractor 700. In pelletizer 800, multilayer strands 900 are finely cut to obtain multilayer pellets. Each multilayer pellet also has a core-sheath sectional structure formed by core material 910 and sheath material 920, as shown in Fig. 1B.

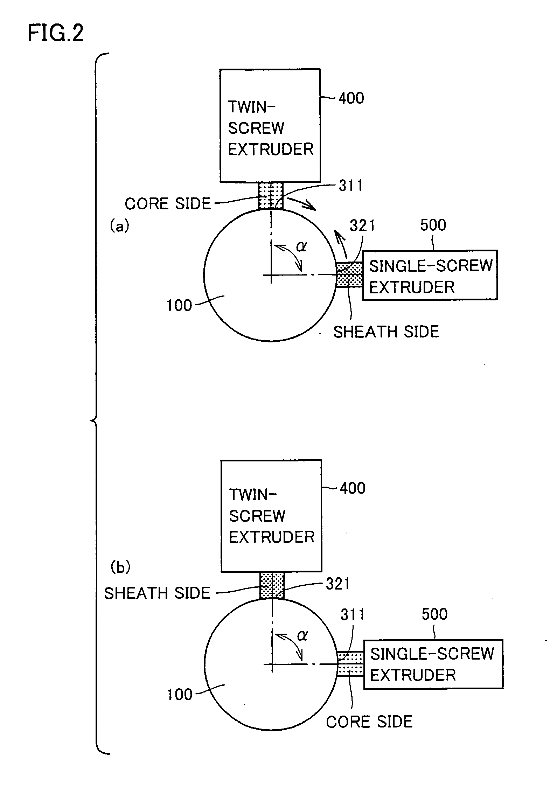

Fig. 2 shows diagrams illustrating a mode of exchanging the first extruder and the second extruder with the die assembly according to this embodiment. The outline of extrusion equipment for multilayer extrusions according to this embodiment is first described.

The extrusion equipment for multilayer extrusions according to this embodiment comprises die assembly 100 extruding multilayer extrusions each having such a core-sheath structure that the core material is covered with the sheath material on the outer periphery thereof, and die assembly 100 has a first die assembly body 250 provided with a core material supply port 311 on the side surface thereof and a second die assembly body 200 provided with a sheath material supply port 321 on the side surface thereof, which are detachably connected in the vertical direction, while first die assembly body 250 and second die assembly body 200 are rendered connectable also when one of the die assembly bodies is horizontally rotated by an angle twice an angle α with respect to the other die assembly body.

Thus, it is possible to form a first working mode of making core material supply port 311 communicate with first extruder 400 and making sheath material supply port 321 communicate with second extruder 500 and a second working mode of making second extruder 500 communicate with core material supply port 311 and making first extruder 400 communicate with sheath material supply port 321 by connecting first die assembly body 250 and second die assembly body 200 with each other by horizontally rotating the die assembly bodies at the angle twice the angle α while absorbing vertical positional deviation with height controllers without turning around first extruder 400 and second extruder 500.

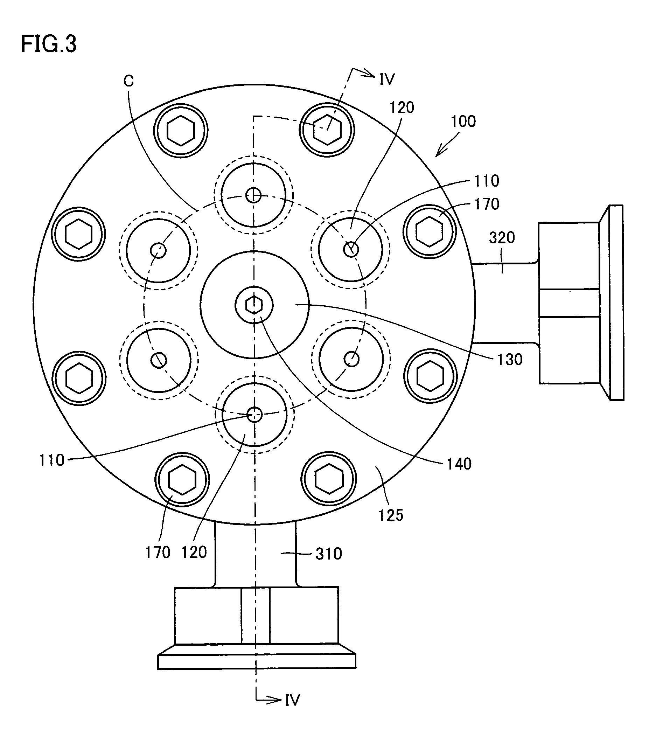

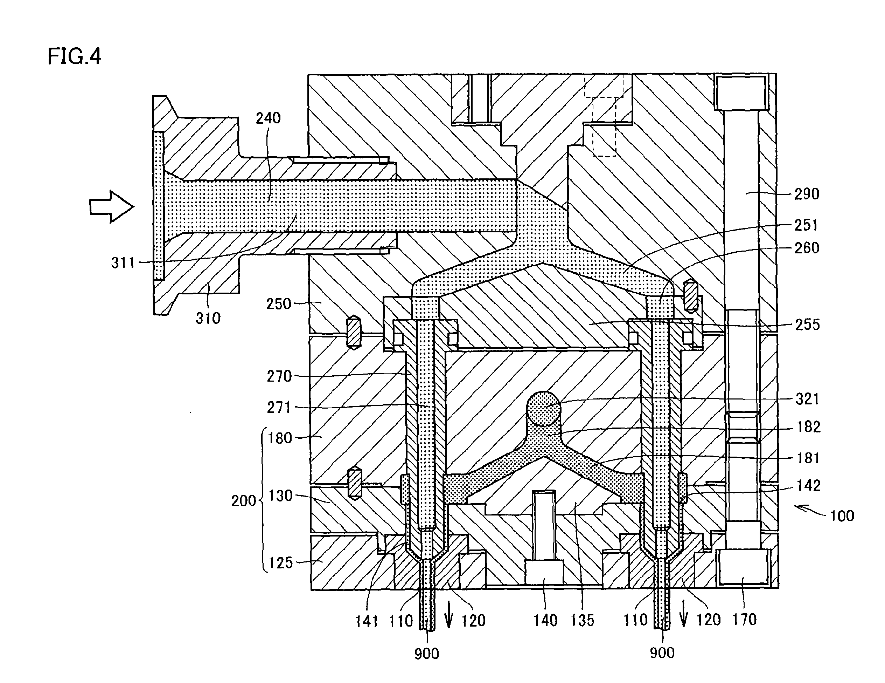

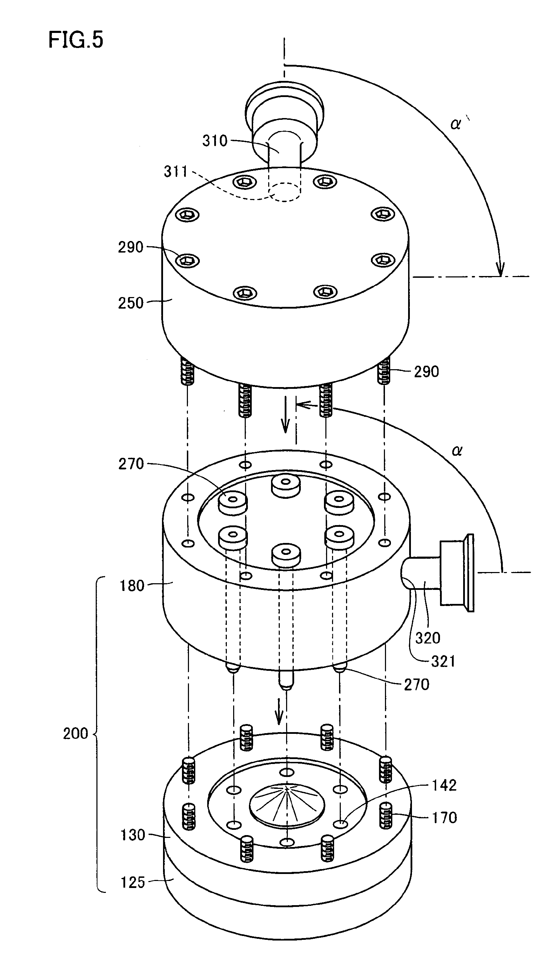

The structure of die assembly 100 capable of forming these two working modes is now described in detail. Fig. 3 is a bottom plan view of the die assembly, showing the structure of an extrusion surface extruding the multilayer strands, Fig. 4 is a sectional view taken along the line IV-IV in Fig. 3, showing a longitudinal sectional structure of the die assembly, and Fig. 5 is an exploded perspective view of the die assembly.

As shown in Figs. 3 to 5, die assembly 100 has a substantially cylindrical body. As shown in Fig. 2, a plurality of extrusion ports 110 are provided on the bottom surface of die assembly 100 having a circular contour on a circle C respectively. According to this embodiment, six extrusion ports 110 are arranged on circle C at regular intervals. In other words, extrusion ports 110 are arranged every 60° from the center of circle C.

A core material supply cylinder 310 and a sheath material supply cylinder 320 are connected to the peripheral surface of die assembly 100 in directions forming an angle of 90°. The forward end of core material supply cylinder 310 is inserted into core material supply port 311 (see Fig. 4), while the forward end of sheath material supply cylinder 320 is inserted in sheath material supply port 321.

Die assembly 100, roughly divided into two portions in the vertical direction, is constituted of first die assembly body 250, connected with core material supply cylinder 310, forming an upper portion thereof and second die assembly body 200, connected with sheath material supply cylinder 320, forming a lower portion thereof. Body of first die assembly body 250 and second die assembly body 200 are cylindrically formed.

Second die assembly body 200 is constituted of an intermediate body 180, connected with sheath material supply cylinder 320, forming an intermediate portion of die assembly 100 as well as an upper press member 130 and a lower press member 125 connected to a lower portion thereof. Intermediate body 180, upper press member 130 and lower press member 125 are connected to each other with bolts 170. Eight bolts 170 are provided at regular intervals, as shown in Figs. 3 and 4.

First die assembly body 250 is fixed to second die assembly body 200 with bolts 290. Eight bolts 290 are provided at regular intervals, as shown in Fig. 5. In other words, the bolts are provided every 45° from the central axis of circle C. A core material feed pipe 240 horizontally extending, bending and further extending downward is formed in first die assembly body 250 and core material supply cylinder 310 connected thereto.

First die assembly body 250 is formed with a conically spreading core material supply portion 251 connected with core material feed pipe 240 on the center thereof. Core material supply portion 251 has a circular outline, and both of top and bottom surfaces therein are conical. Core material supply portion 251 is so conically formed that the core material supplied from core material feed pipe 240 can be smoothly supplied in radial directions of core material supply portion 251.

Six through holes 260 are provided on the bottom surface of core material supply portion 251 on positions corresponding to extrusion ports 110 respectively. The bottom of core material supply portion 251 is constituted of a discoidal member 255 fitted from the lower surface of first die assembly body 250.

Intermediate body 180 of second die assembly body 200 is provided with detachably inserted cylindrical core nozzles 270. According to this embodiment, six core nozzles 270 are provided on positions corresponding to extrusion ports 110 respectively. Upper ends of core nozzles 270 are enlarged in diameter, while lower portions thereof are temporarily reduced in diameter to extend downward so that the lower ends thereof are downwardly coned. Core material extruding passageways 271 are formed in core nozzles 270, and core material extruding passageways 271 are reduced in diameter on lower ends thereof before merging with sheath material extruding passageways 141.

A sheath material feed pipe 182 horizontally extending, perpendicularly bending and extending downward is formed in intermediate body 180 and sheath material supply cylinder 320 connected to the side surface thereof. Intermediate body 180 is formed with a conically spreading sheath material supply portion 181 connected with sheath material feed pipe 182 on the center thereof. Sheath material supply portion 181 has a circular outline.

Sheath material supply portion 181 is constituted of an upward conical recess formed on the lower surface of intermediate body 180 and an upward conical member 135 fixed to the upper surface of upper press member 130 with a bolt 140, as shown in Fig. 4. A plurality of openings 142 communicating with sheath material extruding passageways 141 formed on the outer peripheries of lower portions of core nozzles 270 are provided on the lower surface of sheath material supply portion 181, as shown in Fig. 5.

Six extrusion ports 110 are provided on the lower surface of second die assembly body 200 as hereinabove described, and the peripheries of extrusion ports 110 are formed by extrusion port forming members 120. As shown in Fig. 3, extrusion port forming members 120 have flanges on upper ends thereof, so that the same are fixed to second die assembly body 200 through these flanges held between upper press member 130 and lower press member 125.

Recesses are formed on the upper surfaces of extrusion port forming members 120 for receiving the lower ends of core nozzles 270, while through holes communicating with extrusion ports 110 are formed on the bottoms of the recesses. Upper portions of the recesses are cylindrical formed while lower portions linked to the through holes are inverse-conically formed, as shown in Fig. 3.

Sheath material extruding passageways 141 are constituted of clearances between these recesses and the forward ends of core nozzles 270, so that the flow rates of the extruded sheath material can be controlled by varying thicknesses of these clearances.

Paths up to extrusion of the core material and the sheath material are described with reference to Fig. 3. The core material supplied to core material supply port 311 is supplied to the center of core material supply portion 251 through core material feed pipe 240. The supplied core material radially spreads in core material supply portion 251, to flow into through holes 260. The core material passing through holes 260 is guided to core material extruding passageways 271 on the central portions of core nozzles 270.

The sheath material supplied to sheath material supply port 321 is supplied to the center of sheath material supply portion 181 through sheath material feed pipe 182. The supplied sheath material radially spreads in sheath material supply portion 181, to flow into sheath material extruding passageways 141.

The core material guided to core material extruding passageways 271 and the sheath material guided to sheath material extruding passageways 141 merge with each other before passing through extrusion ports 110, to form multilayer strands 900 of the core material covered with the sheath material on the outer peripheral side thereof. Extruded plurality of multilayer strands 900 are cooled with the cooling water in cooling bath 600, and cut with pelletizer 800 as described above for forming pellets.

Multilayer strands 900 may be cut into pellets with pelletizer 800, or may be used in the form of strands. Further, multilayer strands 900 extruded from die assembly 100 may be successively cut with a cutter rotating on the extrusion surface of die assembly 100. In this case, an underwater cut system of cutting the same while covering the extrusion surface of the die assembly with water and immediately cooling the same may be employed, or a hot cut system of cutting the same without specific cooling may be employed.

In die assembly 100 according to this embodiment, six extrusion ports 110 are provided at regular intervals, while six core nozzles 270 are provided on the positions corresponding thereto. Further, first die assembly body 250 and second die assembly body 200 are connected with each other through eight bolts 290 provided at regular intervals. Thus, first and second die assembly bodies 250 and 200 can be connected with each other also when first die assembly body 250 is rotated clockwise at the angle α = 90° clockwise and second die assembly body 200 is rotated at the angle α = 90° anticlockwise.

Thus, in a case of exchanging first extruder 400 and second extruder 500 from such a working mode that first extruder 400 is connected to core material supply port 311 and second extruder 500 is connected to sheath material supply port 321, first extruder 400 and second extruder 500 can be exchanged without turning around the same on a set plane by connecting first die assembly 250 and second die assembly 200 with each other while mutually rotating the same, connecting core material supply port 311 to second extruder and connecting sheath material supply port 321 to first extruder 400.

When first die assembly body 250 and second die assembly body 200 are rotated, however, the vertical positions of first extruder 400 and second extruder 500 having been connected before this rotation deviate from each other. According to this embodiment, this vertical positional deviation is absorbed by height controllers described below. These height controllers are now described.

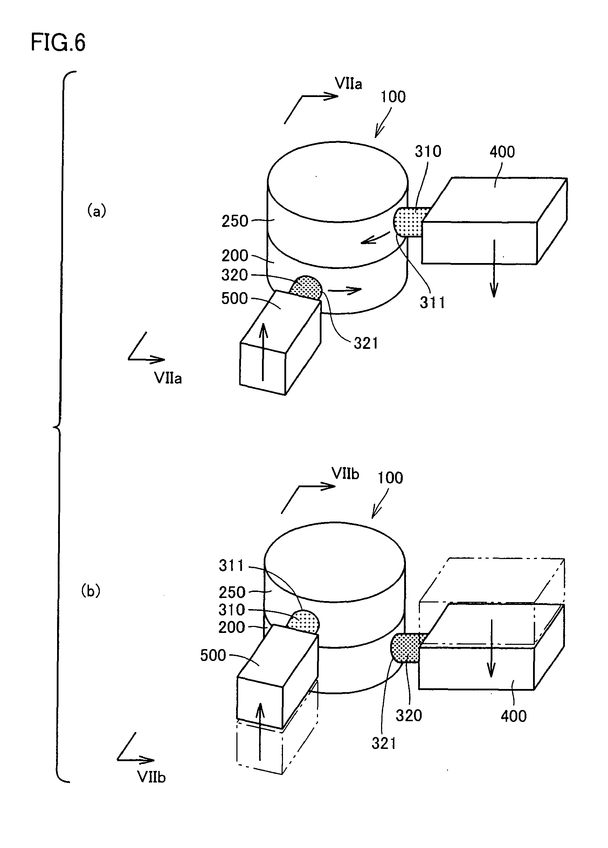

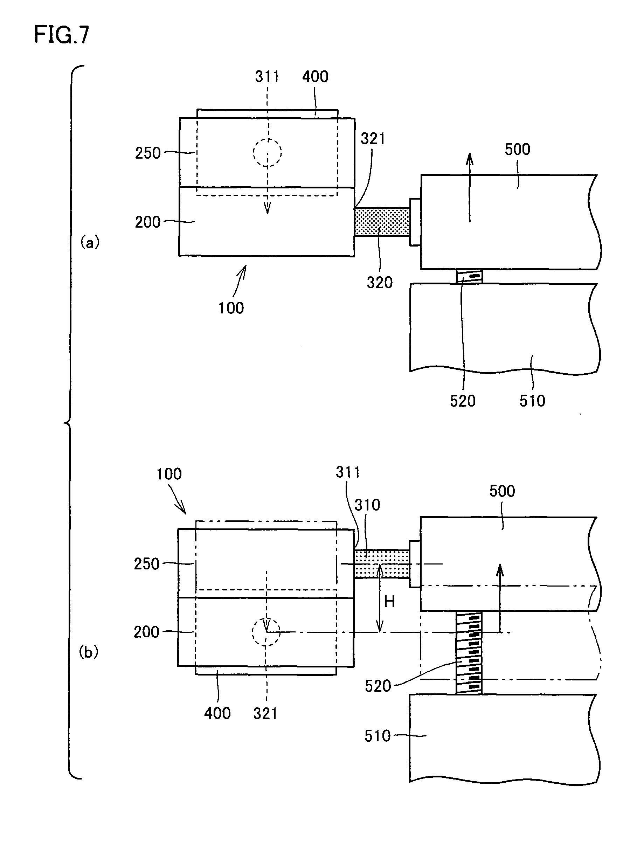

Fig. 6 shows perspective views illustrating the first extruder and the second extruder comprising elevators as the height controllers respectively, Fig. 7(a) is a diagram as viewed along arrow VIIa-VIIa in Fig. 6(a), and Fig. 7(b) is a diagram as viewed along arrow VIIb-VIIb in Fig. 6(b). As shown in Figs. 6 and 7, the elevators are provided on first extruder 400 and second extruder 500 respectively, for lowering first extruder 400 by a height H and raising second extruder 500 by height H when rotating first die assembly body 250 by 90° clockwise and rotating second die assembly body 200 by 90° anticlockwise.

That vertically moved through rotation of a ball screw 520 upwardly projecting from a table 510 or the like can be employed as each of such elevators, as shown in Fig. 7. Ball screw 520 may be replaced with a hydraulic cylinder. Further, each extruder may be raised with a jack or the like, so that the vertical position is held by inserting a spacer or the like into the clearance.

Such elevators are attached to both of first extruder 400 and second extruder 500 so that the vertical positional deviation between core material supply port 311 and sheath material supply port 321 and between first extruder 400 and second extruder 500 of die assembly 100 can be absorbed without changing the vertical position of die assembly 100.

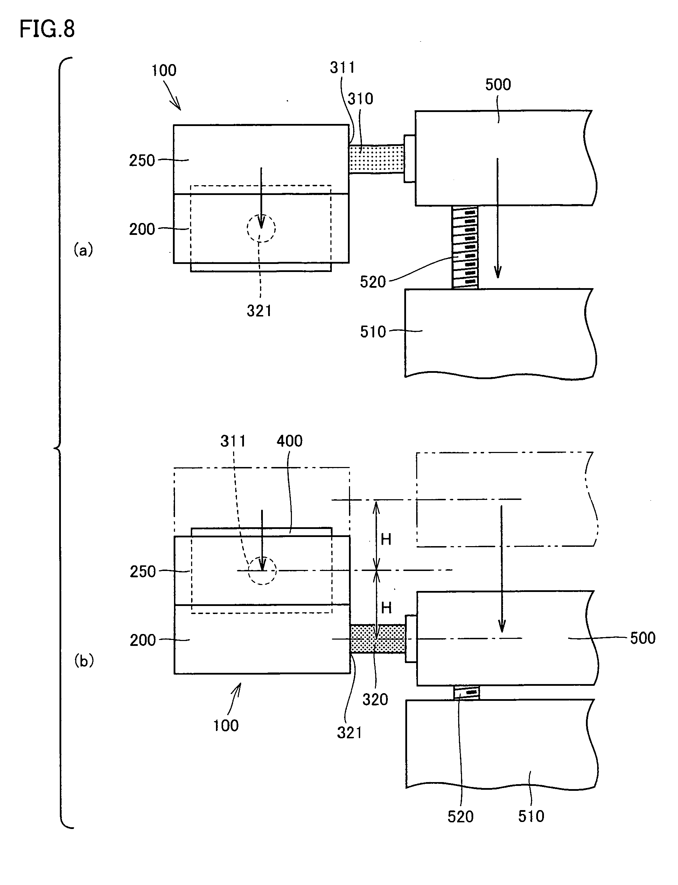

While first extruder 400 and second extruder 500 are vertically moved without changing the height of die assembly 100, the heights of second extruder 500 and die assembly 100 may alternatively be changed without changing the height of first extruder 400, as shown in Fig. 8.

Figs. 8(a) and 8(b) illustrate the second extruder comprising the elevator as the height controller in correspondence to Figs. 7(a) and 7(b) respectively. As shown in Fig. 8, the vertical positional deviation can be absorbed while keeping first extruder 400 stationary, by lowering second extruder 500 by a height 2H and lowering die assembly 100 by height H. While the size of the elevator for vertically moving first extruder 400 is increased when a large-sized twin-screw extruder is employed as first extruder 400, no large-sized elevator capable of elevating first extruder 400 is necessary according to this structure, since first extruder 400 remains stationary.

In order to vertically move die assembly 100, a hanging bolt having a ring on the upper end thereof is attached to the upper surface of die assembly 100, for example, for hanging the forward end of a wire or a chain thereon and hoisting the die assembly with a winch or the like.

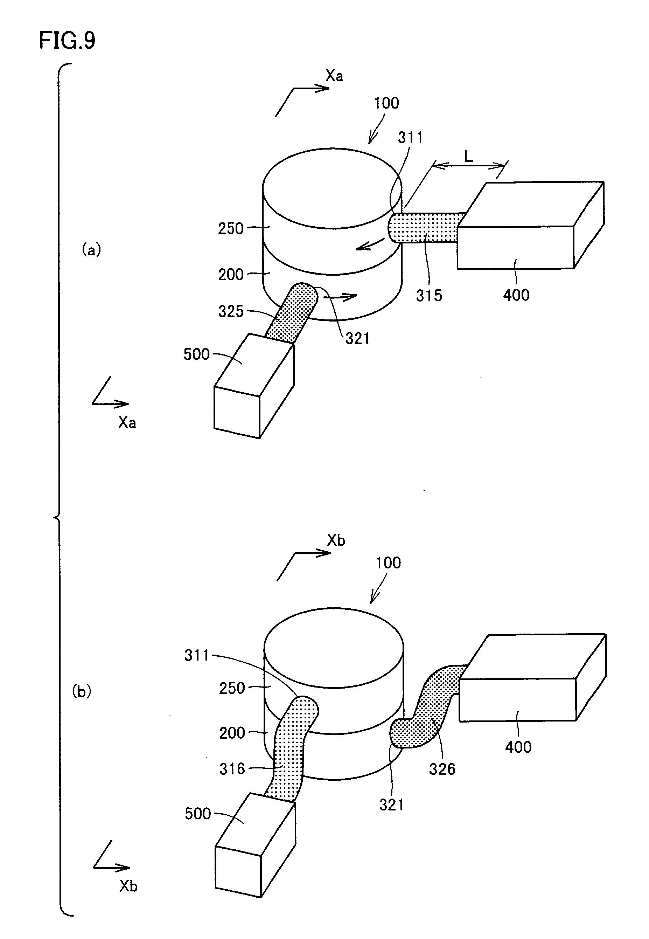

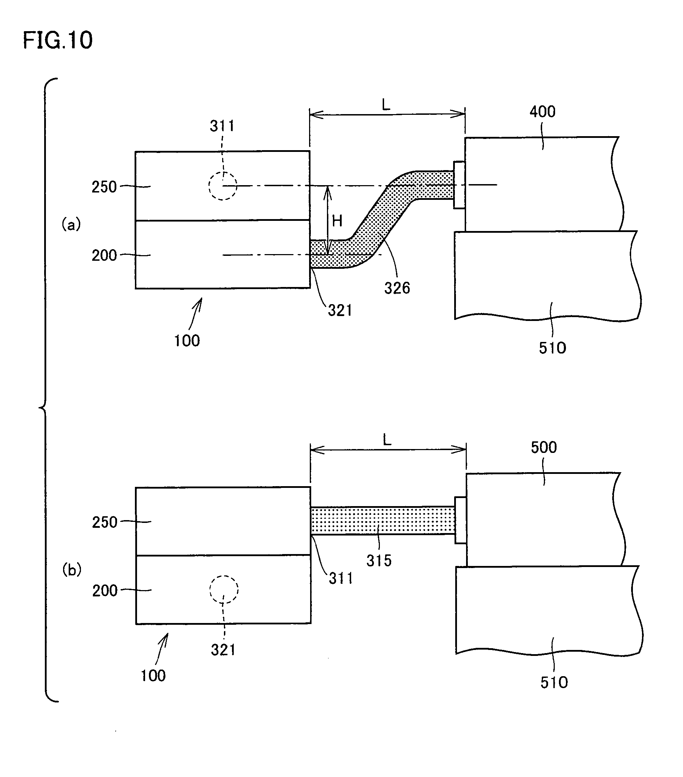

Fig. 9 shows perspective views illustrating bent connecting pipes provided as the height controllers, Fig. 10(a) is a diagram as viewed along arrow Xa-Xa in Fig. 9(a), and Fig. 10(b) is a diagram as viewed along arrow Xb-Xb in Fig. 9(b). As shown in Figs. 9 and 10, the vertical positional deviation may be absorbed by connecting die assembly 100, first extruder 400 and second extruder 500 with each other through connecting pipes 316 and 326 having different heights on first and second ends thereof without changing the heights of die assembly 100, firs extruder 400 and second extruder 500.

At this time, the interval L between die assembly 100 and first and second extruders 400 and 500 must be sufficiently ensured, in order to inhibit connecting pipes 316 and 326 from abrupt bending. Therefore, relatively long connecting pipes 315 and 325 are employed as shown in Figs. 9(a) and 10(a), also when there is no vertical positional deviation.

The vertical positional deviation can be absorbed by employing such connecting pipes 316 and 326, without vertically moving die assembly 100, first extruder 400 and second extruder 500.

As hereinabove described, the extruder extruding the core material and the extruder extruding the sheath material can be exchanged in production unit 1 according to this embodiment, without turning around first extruder 400 and second extruder 500. Thus, productivity of multilayer strands 900 having an inverted core-sheath ratio is improved when first extruder 400 and second extruder 500 are different in extrusion capability from each other. Further, degeneration caused by heating the extruded materials in the extruders over a long time can be avoided.

In order to produce multilayer strands 900 in which the core material and the sheath material are switched, first extruder 400 and second extruder 500 may simply be exchanged while leaving the materials therein, thereby avoiding labor for exchanging or cleaning the material in extruder 500.

According to this embodiment, first extruder 400 and second extruder 500 are positioned in orthogonal directions (angle α = 90°). In this case, it follows that first die assembly 250 and second die assembly 200 mutually rotate by 2α = 180°, and hence the positions of core nozzles 270 and bolts 290 may be rendered undeviating upon rotation by 180°.

While the numbers of core nozzles 270 and bolts 290 are six and eight respectively in this embodiment, a structure rotatable by 180° can be implemented by providing core nozzles 270 and bolts 290 at regular intervals by multiples of 2 such as two, four, six, eight or 10 respectively.

The angle α formed by first die assembly body 250 and second die assembly body 200 is not restricted to 90° but the angle α may alternatively be 60°, for example. In this case, it follows that first die assembly body 250 and second die assembly body 200 relatively rotate by 2α = 120°, and hence core nozzles 270 and bolts 290 are so arranged that the same are mutually connectable upon rotation by 120°. A structure rotatable by 120° can be implemented by providing core nozzles 270 and bolts 290 at regular intervals by multiples of 3 such as three, six, nine or 12 respectively.

The aforementioned embodiment disclosed this time is illustrative in all points, and does not found any restrictive interpretation. Therefore, the technical scope of the present invention is not interpreted through only the aforementioned embodiment, but defined on the basis of the description of the scope of claim for patent. Further, all modifications within the meaning and range equivalent to the scope of claim for patent are included.

### Industrial Availability

According to the inventive die assembly and the process for production of multilayer extrusions with the same, a die assembly employed for production of multilayer extrusions each having such a core-sheath structure that a core material is covered with a sheath material on the outer periphery thereof can be constituted, so that multilayer multilayer extrusions of the core-sheath structure can be produced with the same.

## Claims

1. Extrusion equipment for multilayer extrusions, comprising:
a die assembly (100) extruding multilayer extrusions (900) each having such a core-sheath structure that a core material (910) is covered with a sheath material (920) on the outer periphery thereof; and
a first extruder (400) and a second extruder (500) connected to the side surface of said die assembly (100) on different vertical positions at an angle α, wherein
said die assembly (100) has a first die assembly body (250) provided with a core material supply port (311) on the side surface thereof and a second die assembly body (200) provided with a sheath material supply port (321) on the side surface thereof, detachably connected in the vertical direction, and
said first die assembly body (250) and said second die assembly body (200) are rendered connectable also when one of the die assembly bodies is horizontally rotated by an angle twice said angle α with respect to the other die assembly body,
to be capable of forming a first working mode of making said core material supply port communicate with said first extruder (400) and making said sheath material supply port (321) communicate with said second extruder (500), and
a second working mode of making said second extruder (500) communicate with said core material supply port (311) and making said first extruder (400) communicate with said sheath material supply port (321) by connecting said first die assembly body (250) and the second die assembly body (200) with each other by horizontally rotating the die assembly bodies at the angle twice said angle α while absorbing vertical positional deviation with a height controller.

2. The extrusion equipment for multilayer extrusions according to claim 1, wherein
said height controller includes an elevator (510, 520) provided on at least one of said first extruder and said second extruder.

3. The extrusion equipment according to claim 1, wherein
said height controller includes a connecting pipe (316, 326), so bent as to have different heights on first and second ends, connecting said die assembly (100) and said first extruder (250) with each other and/or said die assembly (100) and said second extruder (200) with each other.

4. The extrusion equipment for multilayer extrusions according to claim 1, wherein
said first extruder (250) and said second extruder (200) are different in extrusion capacity from each other.

5. A process for production of multilayer extrusions for producing multilayer extrusions (900) each having such a core-sheath structure that a core material (910) is covered with a sheath material (920) on the outer periphery thereof with the extrusion equipment for multilayer extrusions according to claim 4,
through a step of making an extruder having large extrusion capacity communicate with said sheath material supply port (321) of said die assembly (100) while making an extruder having small extrusion capacity communicate with said core material supply port (311) of said die assembly, and
by extruding multilayer extrusions (900) each having the sheath material (920) larger in weight than the core material (910) from said die assembly (100) by supplying the sheath material (920) with the extruder having large extrusion capacity and supplying the core material (910) with said extruder having small extrusion capacity.
